# EUROPEAN PATENT SPECIFICATION

(11) **EP 0 382 313 B1**
(45) Date of publication and mention of the grant of the patent: **20.10.1993**
(21) Application number: 90200277.3
(22) Date of filing: 07.02.1990
(51) Int. Cl.: B01D 3/10

(54) **Vacuum distillation process**
Vakuum-Destillationsverfahren
Procédé de distillation à vide

(30) Priority: 10.02.1989 GB 8903009
(43) Date of publication of application: 16.08.1990
(73) Proprietor: SHELL INTERNATIONALE RESEARCH MAATSCHAPPIJ B.V., 2596 HR Den Haag (NL)
(72) Inventor: Hamer, Johannes Albertus, NL-2596 HR The Hague (NL); Van der Heijden, Pieter, NL-2596 HR The Hague (NL)

(56) References cited:
- DE-A- 2 855 258
- US-A- 3 749 647
- US-A- 4 409 064
- US-A- 4 568 428
- F. Pollak, Pump Users Handbook, Morden 1988, page 58, 59, 61-63.

## Description

The present invention relates to a vacuum distillation process for distilling a feed containing hydrocarbons, which feed has a temperature in the range of from 380 to 425 °C, at a subatmospheric pressure in the range of from 650 to 5 200 Pa. The feed is sometimes referred to as long residue.

Such a vacuum distillation process comprises supplying feed to a furnace, passing heated feed comprising vapour and liquid from the furnace into a distillation column operating at a subatmospheric pressure, allowing vapour to rise inside the distillation column, contacting the rising vapour with a de-entrainment device to remove entrained liquid from the rising vapour, spraying wash liquid on the de-entrainment device, passing the wash liquid containing mixture from the distillation column to a vessel, and withdrawing the wash liquid containing mixture from the vessel.

In the known process the wash liquid is withdrawn from the vessel by means of a pump. It was found, however, that cavitation occurred in the pump, which reduced the pump's life considerably. A reason for the cavitation was found to be the high temperature of the wash liquid. This high temperature of the wash liquid can be caused by higher feed inlet temperatures which are being applied. Such higher feed inlet temperature are made possible by employing the vacuum distillation device as described in British patent application No. 89 03 007.6 filed on 10th February, 1989.

It is an object of the present invention to provide a vacuum distillation process in which the chance of cavitation is reduced considerably.

To this end the vacuum distillation process according to the present invention is characterized in that the wash liquid containing mixture is cooled prior to being withdrawn from the vessel by mixing the mixture with part of the feed withdrawn from the feed upstream the furnace.

An advantage of the process of the present invention is that by mixing the wash liquid containing mixture with feed withdrawn from the feed upstream the furnace prior to heating energy is saved.

Mixing can be done in the vessel or in the conduit connecting the distillation column and the vessel through which the wash liquid containing mixture is passed to the vessel.

Thus in the process according to the present invention cooled wash liquid is present in the vessel. As a result thermal degradation of the wash liquid is reduced considerable.

Reference is made to F. Pollak, Pump Users Handbook, Morden 1988, pages 58, 59, 61-63, this publication discloses several measures to avoid cavitation, one of the measures being lowering the vapour pressure of the pumped liquid by lowering the pumping temperature.

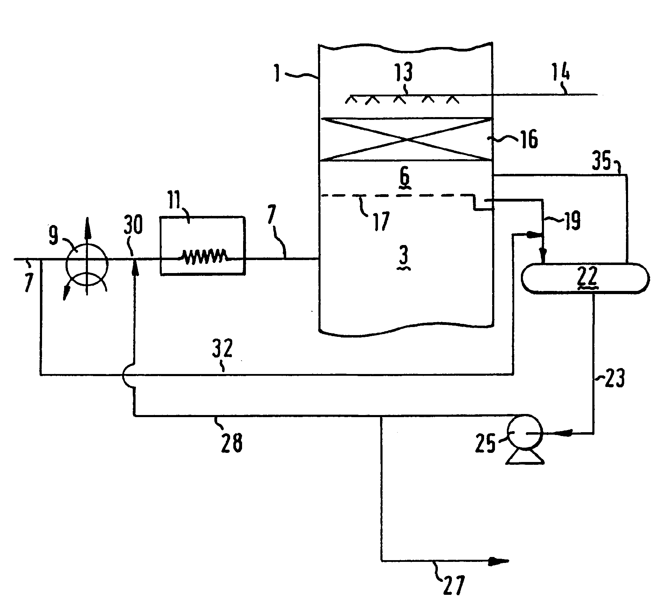

The invention will now be described by way of example in more detail with reference to the accompanying figure showing schematically part of a longitudinal section of a distillation column 1, including an inlet section 3 and a wash section 6 arranged above the inlet section 3. Please note that the distillation column 1 further includes a top section and a bottom section which are not shown in the figure.

Into the inlet section 3 debouches feed supply conduit 7 which passes through preheater 9 and furnace 11.

The wash section 6 comprises a sprayer 13 provided with a wash liquid supply conduit 14, a de-entrainment device 16 and a draw-off tray 17. Removal conduit 19 connects the draw-off tray 17 to vessel 22. The de-entrainment device comprises trays, packing or other equipment suitable to remove liquid from a vapour.

During normal operation feed passing through supply conduit 7 is preheated in preheater 9 and further heated in furnace 11 to vaporize part of the feed. Heated feed comprising vapour and liquid is passed from the furnace 11 into the inlet section 3 of the distillation column 1. Which distillation column 1 operates at a subatmospheric pressure.

Liquid drops downwards and is collected in the bottom section (not shown) from which the liquid is removed. Vapour rises inside the distillation column 1 to the top section (not shown) from which the vapour is withdrawn by means of a vacuum pump such as a steam ejector.

The rising vapour passes through the wash section 6 and in the de-entrainment device 16 entrained liquid drops are separated from the rising vapour.

Wash liquid is sprayed by sprayer 13 on the de-entrainment device 16 to remove entrained liquid droplets therefrom. Thus heavy components collected on the de-entrainment device 16 are washed away before substantial cracking of heavy components can occur.

Wash liquid and removed liquid are collected on the draw-off tray 17 from which the wash liquid containing mixture is removed through removal conduit 19.

The wash liquid containing mixture is passed to vessel 22 from which mixture is withdrawn through conduit 23 by means of pump 25. Withdrawn mixture liquid can be pumped to a storage (not shown) through conduit 27 for further use. Alternatively, to enhance the distillation recovery at least part of the withdrawn mixture can be supplied through conduit 28 to the feed in the feed supply conduit 7 at a joint 30 arranged at a place in the feed supply conduit 7 at which the temperature of the feed is about equal to the temperature of the withdrawn mixture or downstream the last element of preheater 9.

A part of the feed having a temperature which is lower than the temperature of the mixture entering into removal conduit 19 is supplied through conduit 32 to removal conduit 19 in which the part of the feed is mixed with the mixture to cool it. Suitably the amount is between 0.10 and 1.25 kg per kg of wash liquid containing mixture supplied to the vessel. The part of the feed used for cooling is separated from the feed upstream furnace 11.

The amount of feed mixed with wash liquid containing mixture is such that the temperature of the mixture is just below the temperature at which the liquid will cause cavitation in the pump 25.

To make the pressure in the vapour space of the vessel 22 substantially equal to the pressure in the distillation column 1, the vapour space is connected to the interior of the distillation column 1 by means of line 35.

## Claims

1. Vacuum distillation process comprising supplying feed to a furnace (11), passing heated feed comprising vapour and liquid from the furnace (11) into a distillation column (1) operating at a subatmospheric pressure, allowing vapour to rise inside the distillation column (1), contacting the rising vapour with a de-entrainment device (16) to remove entrained liquid from the rising vapour, spraying wash liquid on the de-entrainment device (16), passing wash liquid from the distillation column (1) to a vessel (22), and withdrawing wash liquid containing mixture from the vessel (22), characterized in that the wash liquid containing mixture is cooled prior to being withdrawn from the vessel (22) by mixing the mixture with part of the feed withdrawn from the feed upstream the furnace (11).

2. Vacuum distillation process as claimed in claim 1, further comprising supplying at least part of the wash liquid containing mixture from the vessel (22) to the feed upstream the furnace (11).

3. Vacuum distillation process as claimed in claim 1 or 2, wherein the amount of feed used to cool the wash liquid containing mixture is between 0.10 and 1.25 kg per kg of mixture supplied to the vessel (22).

## Patentansprüche

1. Vakuumdestillationsverfahren, das folgende Schritte umfaßt:
das Eingeben einer Beschickung in einen Ofen (11), das Leiten erhitzter Beschickung, die Gas und Flüssigkeit enthält, von dem Ofen (11) in eine Destillationskolonne (1), die bei einem Unterdruck arbeitet, das Zulassen, daß Gas innerhalb der Destillationskolonne (1) aufsteigt, das Inberührungbringen des aufsteigenden Gases mit einer Einrichtung (16) zum Entfernen mitgerissenen Materials, um mitgerissene Flüssigkeit von dem aufsteigenden Gas zu entfernen, das Einsprühen einer Waschflüssigkeit auf die Einrichtung (16) zum Entfernen mitgerissenen Materials, das Leiten von Waschflüssigkeit von der Destillationskolonne (1) in einen Kessel (22) und das Entnehmen von Waschflüssigkeit enthaltender Mischung von dem Kessel (22), dadurch gekennzeichnet, daß die Waschflüssigkeit enthaltende Mischung vor ihrer Entnahme aus dem Kessel (22) durch Mischen der Mischung mit einem Teil der Beschickung, der von dem Zufuhrmaterial stromaufwärts des Ofens (11) entnommen worden ist, gekühlt wird.

2. Vakuumdestillationsverfahren nach Anspruch 1, der weiterhin das Eingeben wenigstens eines Teils der Waschflüssigkeit enthaltenden Mischung von dem Kessel (22) in die Beschikkung stromaufwärts des Ofens (11) umfaßt.

3. Vakuumdestillationsverfahren nach Anspruch 1 oder 2, wobei der Anteil des Zufuhrmaterials, der verwendet wird, um die Waschflüssigkeit enthaltende Mischung zu kühlen, zwischen 0,10 und 1,25 kg pro kg Mischung, die in den Kessel (22) eingegeben wird, liegt.

## Revendications

1. Procédé de distillation sous vide selon lequel on introduit la charge dans un four (11), on fait passer la charge chauffée comprenant de la vapeur et du liquide du four (11) dans une colonne de distillation (1) fonctionnant sous pression réduite, on laisse monter la vapeur à l'intérieur de la colonne de distillation (1), on met en contact la vapeur qui monte avec un dispositif anti-entraînement (16) pour enlever le liquide entraîné de la vapeur qui monte, on pulvérise un liquide de lavage sur le dispositif anti-entraînement, on fait passer le liquide de lavage de la colonne de distillation (1) à un récipient (22) et on évacue du récipient (22) le mélange contenant le liquide de lavage, caractérisé en ce que le mélange contenant le liquide de lavage est refroidi avant d'être évacué du récipient (22) en étant mélangé avec une partie de la charge prélevée dans la charge en amont du four (11).

2. Procédé de distillation sous vide selon la revendication 1, dans lequel au moins une partie du mélange contenant le liquide de lavage provenant du récipient (22) est réintroduite dans la charge en amont du four (11).

3. Procédé de distillation sous vide selon la revendication 1 ou 2, dans lequel la quantité de charge utilisée pour refroidir le mélange contenant le liquide de lavage est comprise entre 0,10 et 1,25 kg par kg de mélange introduit dans le récipient (22).
